# EUROPEAN PATENT APPLICATION

(11) **EP 2 233 782 A1**
(43) Date of publication of application: **29.09.2010**
(21) Application number: 08858759.7
(22) Date of filing: 27.11.2008
(51) Int. Cl.: F16G 13/16, H02G 11/00

(54) **CABLE DRAG CHAIN**

(30) Priority: 10.12.2007 JP 2007318777
(71) Applicant: Shima Seiki Mfg., Ltd, Wakayama-shi Wakayama 641-8511 (JP)
(72) Inventor: SHIMOMURA, Hironori, Wakayama-shi Wakayama 641-8511 (JP)
(74) Representative: Emde, Eric
(86) International application number: PCT/JP2008/003504
(87) International publication number: WO 2009/075069

(57) **Abstract**

The invention provides a cable drag chain capable of applying brake on turning of a frame body and also excelling in productivity. A cable drag chain is formed by coupling a plurality of frame bodies F so as to be turnable with respect to each other, where a long body such as a cable is arranged in a guide section surrounded by each frame body. The cable drag chain has a configuration of limiting a turning angle of a frame body F2 when a stopper piece 31 (stopper pad 42) of one frame body F1 comes into contact with a stopper pad 41 (stopper piece 32) of the other frame body F2 in the coupled frame bodies F1, F2. The cable drag chain also has a configuration that, when the coupled frame bodies F are turned, the elastic projections 51, 52 of the one frame body F2 comes into contact with a pad portion 61 of the other frame body F1, thereby applying brake on relative turning of the frame bodies F1, F2 by the elasticity of elastic projections 51, 52.

## Description

### TECHNICAL FIELD

The present invention relates to a cable drag chain for guiding and protecting a power cable and a signal cable, or an air hose, a hydraulic hose, and the like connected to a movable body.

### BACKGROUND ART

In a power cable and a signal cable, or an air hose, a hydraulic hose, and the like (hereinafter collectively referred to as cable) connected to a movable body, a portion to which a bending stress acts in a longitudinal direction of the cable moves with movement of the movable body. The cable is thus conventionally guided and protected with a cable drag chain so that the cable does not bend excessively.

The cable drag chain is formed by coupling a plurality of frame bodies in a freely bendable manner to each other, so that the cable can be protected by the frame bodies by arranging the cable in a guide section surrounded by the frame bodies. Each frame body includes a stopper piece and a stopper pad, where a turning angle of the coupled frame bodies is limited when the stopper piece of one frame body and the stopper pad of another frame body corresponding to the stopper piece come into contact. Thus, the cable does not bend excessively since the cable arranged in the guide section of the cable drag chain bends along a bending radius of the cable drag chain, which turning angle is restricted.

However, if a movement speed of the movable body becomes fast, a noise problem arises in that a collision noise of the stopper piece and the stopper pad involved in traveling of the cable drag chain becomes large. To solve such a problem, a structure for applying brake on turning of the frame body has been proposed.

For example, Patent Document 1 discloses a configuration of attaching a buffer member to at least one of the stopper piece or the stopper pad, and absorbing the collision noise of the stopper piece and the stopper pad.

Patent Document 2 discloses a configuration of applying brake on the turning using a so-called wedge effect in which the frame bodies slidably come into contact with each other with the turning of the frame bodies, and friction increases as a turning limit is approached. Patent Document 2 also describes that wear of a turning mechanism of the frame body involved in the traveling of the cable drag chain can be suppressed.

Patent Document 1: Japanese Unexamined Patent Publication No. 9-119485
Patent Document 2: Japanese Unexamined Patent Publication No. 2005-256947

### DISCLOSURE OF THE INVENTION

### PROBLEMS TO BE SOLVED BY THE INVENTION

However, the techniques of the above documents have the following problems. First, the configuration of Patent Document 1 has a problem in that production efficiency is poor since a buffer member which is a separate member from the frame body needs to be prepared and attached to the frame body. The configuration of Patent Document 2 also has a problem in that a braking effect degrades by wear since brake is applied by the slidable contact of the frame bodies.

Therefore, one object of the present invention is to provide a cable drag chain capable of reducing a collision noise of a stopper piece and a stopper pad that apply brake on turning of the frame bodies. Another object of the present invention is to provide a cable drag chain in which degradation is less likely to occur in the braking effect with use.

### MEANS FOR SOLVING THE PROBLEMS

The present invention relates to a cable drag chain formed by coupling a plurality of frame bodies so as to be turnable with respect to each other, a long body such as a cable being arranged in a guide section surrounded by each of the frame bodies; the cable drag chain including a turning angle limiting mechanism for limiting a turning angle of the frame body; and a braking mechanism for applying brake on turning of the frame body before a limit of the turning angle. The turning angle limiting mechanism of the cable drag chain includes a stopper piece and a stopper pad integrally formed in each of the frame bodies, and limits the turning angle of the frame bodies when the stopper piece of one frame body comes into contact with the stopper pad of the other frame body in the coupled frame bodies. The braking mechanism of the cable drag chain includes an elastic projection integrally formed with the frame body at one end side of each of the frame bodies and a pad portion integrally formed with the frame body at the other end side of each of the frame bodies, and when the coupled frame bodies are turned, the elastic projection of one frame body comes into contact with the pad portion of the other frame body to apply brake on the relative turning of the frame bodies by an elasticity of the elastic projection.

A representative configuration of applying brake on the turning of the frame body by the elastic projection and the pad portion includes a configuration in which the elastic projection is formed extending outward from the turning center of the frame body and the brake is applied when the elastic projection hits the pad portion and the elastic projection bends in a peripheral direction with respect to the turning center. In addition, there may be adopted a configuration in which the elastic projection is formed in a curved piece extending outward from the turning center of the frame body, and a distal end of the elastic projection hits the pad portion with the turning of the frame body so that the curved piece bends towards the turning center, and the brake is applied on the turning of the frame body by friction of the distal end of the elastic projection and the pad portion. In this case, a frictional force between the distal end of the elastic projection and the pad portion preferably changes due to the changes in a bending amount with the turning of the frame body.

The braking mechanism merely needs to have a configuration of applying brake on the turning of the frame body by the elasticity of the elastic projection. The most basic configuration of the braking mechanism is a configuration in which one elastic projection and one pad portion are arranged for a case where the frame body is turned in a clockwise direction and for a case where the frame body is turned in a counterclockwise direction. The number of elastic projections and pad portions is not particularly limited, and the elastic projection and the pad portion do not necessarily need to correspond one-to-one. For example, one pad portion may come into contact with two elastic projections, or two pad portions may come into contact with one elastic projection.

The configuration in which one pad portion comes into contact with two elastic projections includes arranging a pair of elastic projections in cantilever form at one frame body and having the distal end of each of the elastic projections arranged with a predetermined spacing, and forming the pad portion at the other frame body so as to be arranged between the elastic projections.

The configuration in which two pad portions come into contact with one elastic projection includes arranging one elastic projection in cantilever form at one frame body, and forming a pair of pad portions at the other frame body with a predetermined spacing so as to sandwich the elastic projection therebetween.

### EFFECTS OF THE INVENTION

According to the cable drag chain of the present invention, a collision noise of a turning angle limiting mechanism can be reduced since brake is applied on turning of a frame body by a braking mechanism using elasticity. The braking mechanism having the configuration of the present invention is integrally arranged in the frame body, and thus the cable drag chain of the present invention excels in productivity since the braking mechanism does not need to be arranged afterwards. Furthermore, as the cable drag chain of the present invention limits the turning of the frame body mainly by the elasticity of the elastic projection, a braking effect is less likely to degrade with use of the cable drag chain.

If the cable drag chain of the present invention has the configuration in which one pad portion comes into contact with two elastic projections, the elastic projection is less likely to be damaged even if the cable drag chain is used for a long period of time since the elastic projection that applies brake on the turning of the frame body differs for the case where the frame body is turned in the clockwise direction and for the case where the frame body is turned in the counterclockwise direction.

If the cable drag chain of the present invention has a configuration in which two pad portions come into contact with one elastic projection, the structure of the frame body can be simplified since the elastic projection that applies brake on the turning of the frame body is the same for the case where the frame body is turned in the clockwise direction and for the case where the frame body is turned in the counterclockwise direction. In this case, although the elastic projection has a relatively complex shape so as to project with respect to the frame body and so as to have elasticity, the pad portion may have a simple shape since it is the portion that bends the elastic projection when the elastic projection comes into contact. Thus, formation of a die for manufacturing the frame body is facilitated, and detachment of the frame body from the die when manufacturing the frame body is also facilitated.

### BRIEF DESCRIPTION OF THE DRAWINGS

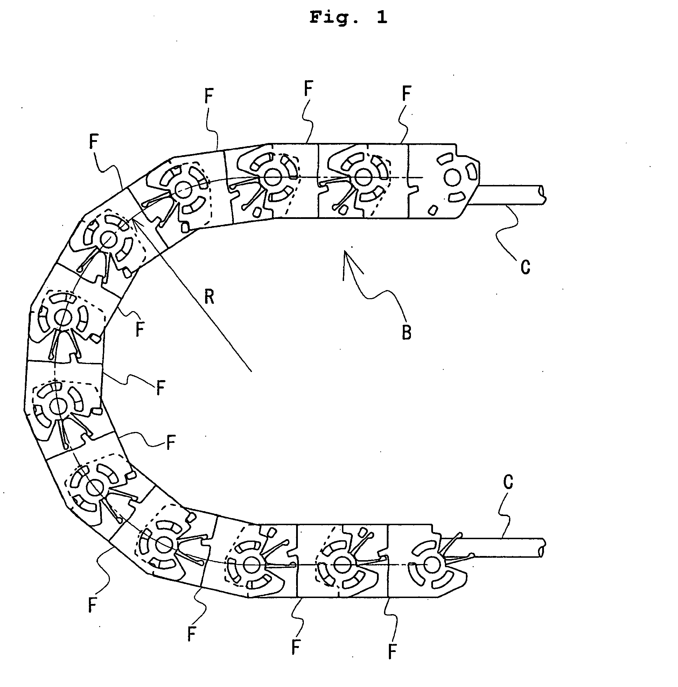

Fig. 1 is a schematic configuration diagram of a cable drag chain according to the present invention.

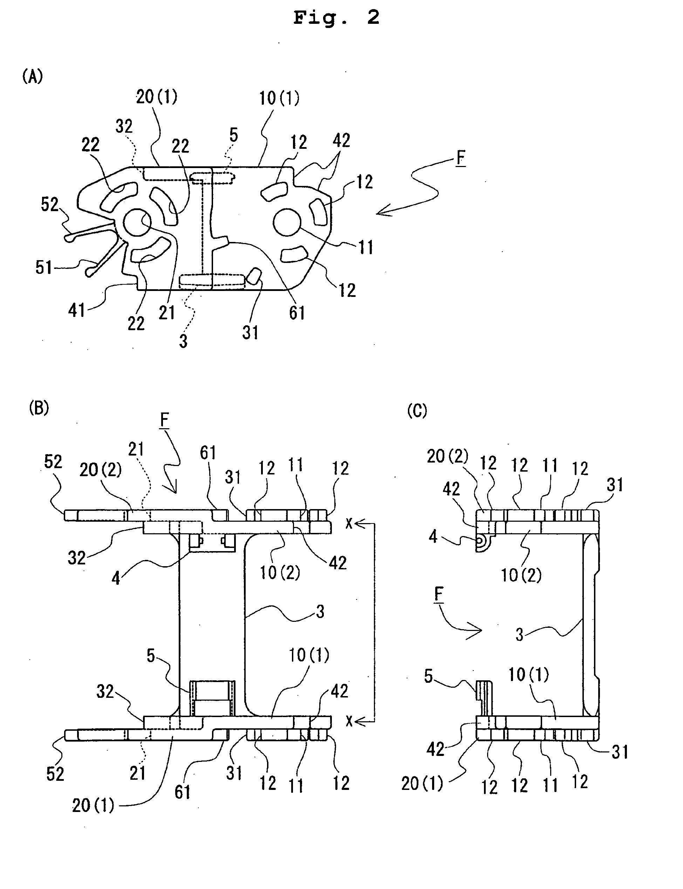

Figs. 2(A) to 2(C) are views each showing a frame body configuring the cable drag chain, where Fig. 2(A) is a front view, Fig. 2(B) is a top view, and Fig. 2(C) is a view taken along line X-X in Fig. 2(B).

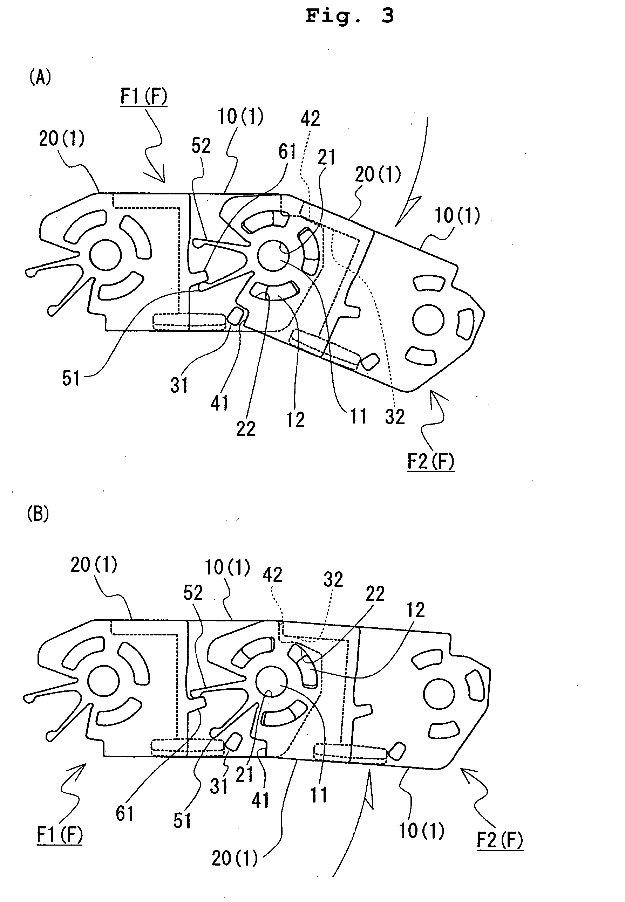

Figs. 3(A) and 3(B) are explanatory views each showing a state in which two frame bodies according to a first embodiment are coupled, where Fig. 3(A) shows a case where the frame body on a right side is turned in a counterclockwise direction, and Fig. 3(B) shows a case where the frame body on the right side is turned in a clockwise direction.

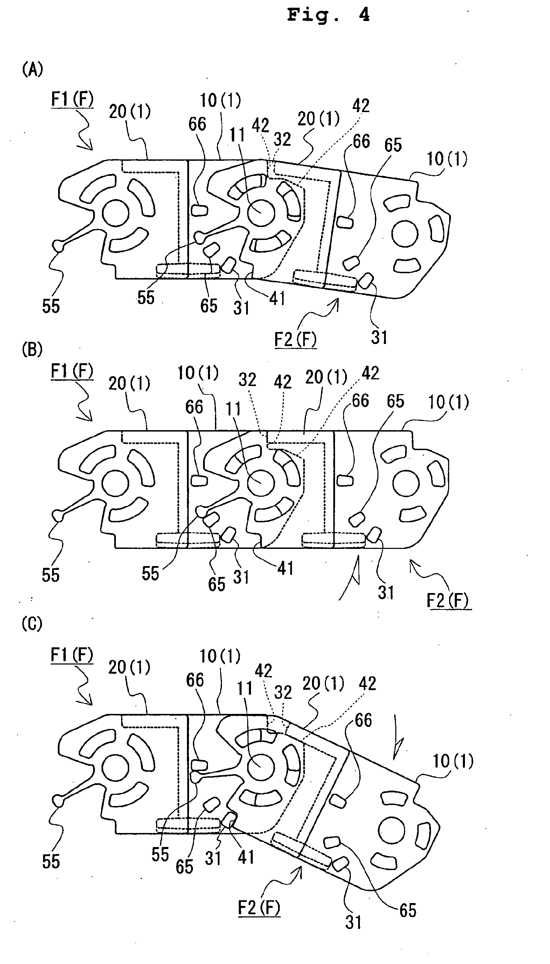

Figs. 4(A) to 4(C) are explanatory views each showing a state in which two frame bodies according to a second embodiment are coupled, where Fig. 4(A) shows a case where an elastic projection and a pad portion are not in contact with each other, Fig. 4(B) shows a case where the frame body on the right side is turned in the counterclockwise direction, and Fig. 4(C) shows a case where the frame body on the right side is turned in the clockwise direction.

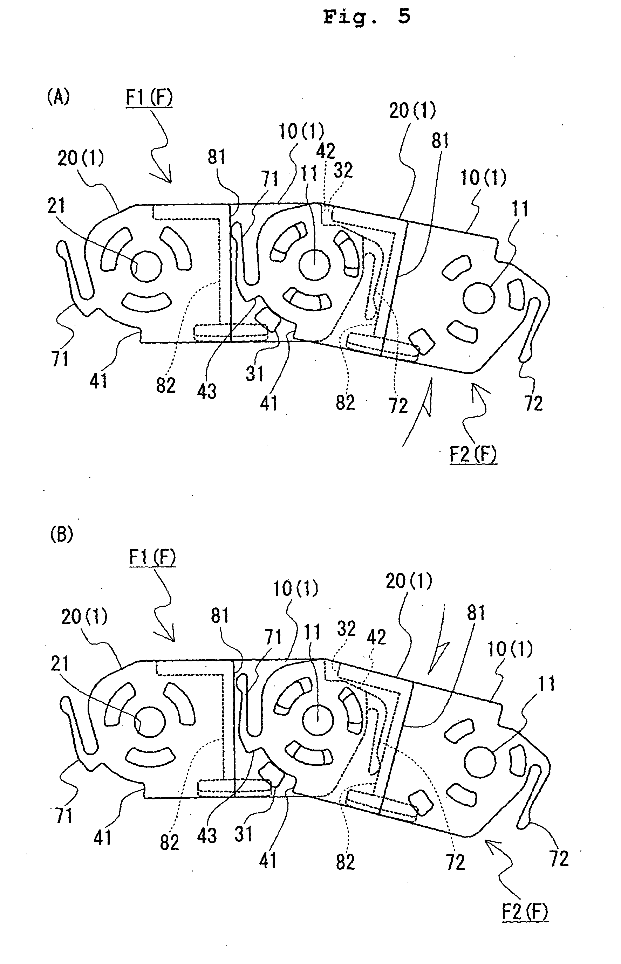

Figs. 5(A) and 5(B) are explanatory views each showing a state in which two frame bodies according to a third embodiment are coupled, where Fig. 5(A) shows a case where the frame body on the right side is turned in the counterclockwise direction, and Fig. 5(B) shows a case where the frame body on the right side is turned in the clockwise direction.

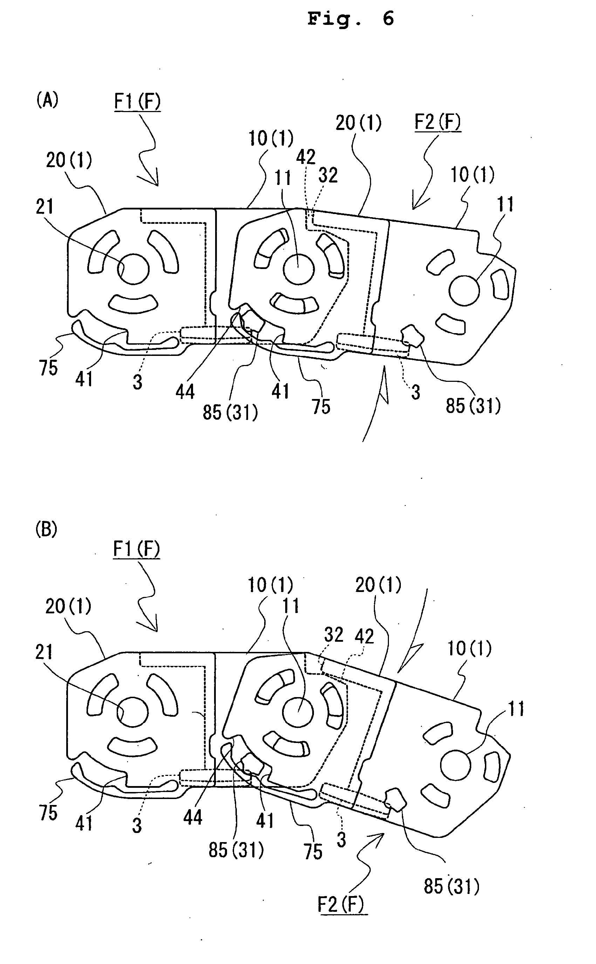

Figs. 6(A) and 6(B) are explanatory views each showing a state in which two frame bodies according to a fourth embodiment are coupled, where Fig. 6(A) shows a case where the frame body on the right side is turned in the counterclockwise direction, and Fig. 6(B) shows a case where the frame body on the right side is turned in the clockwise direction.

### DESCRIPTION OF SYMBOLS

- B: cable drag chain
- C: cable
- F, F1, F2: frame body
- 1, 2: side surface plate
- 10: inner side portion
- 20: outer side portion
- 3: coupling plate
- 4: hinge
- 5: nail portion
- 11: shaft part
- 12: guide projection
- 21: shaft hole
- 22: guide hole
- 31, 32: stopper piece
- 41, 42, 43, 44: stopper pad
- 51, 52, 55, 71, 72, 75: elastic projection
- 61, 65, 66, 81, 82, 85: pad portion

### DETAILED DESCRIPTION OF THE PREFERRED EMBODIMENTS

Embodiments of the present invention will be described below with reference to the drawings.

### <First embodiment>

Fig. 1 is a schematic configuration diagram of a cable drag chain according to the present embodiment. A cable drag chain B is a member for guiding and protecting a cable C for supplying power and the like to a movable body. The cable drag chain B is formed by coupling a plurality of frame bodies F in a freely bendable manner, and the cable C can be arranged in a guide section formed inside the coupled frame bodies F. Generally, the cable drag chain B has at least one of both ends connected to the movable body, and is used with an intermediate portion folded back in a U-shape, where the fold-back position moves with movement of the movable body. Each frame body F configuring the cable drag chain B has a turning angle with respect to the adjacent frame body F limited by a turning angle limiting mechanism, and the cable drag chain B in which the frame bodies F are coupled cannot be bent at a bending radius of smaller than or equal to a predetermined bending radius (R in the figure). Thus, the cable C arranged in the cable drag chain B can supply power and the like to the movable body without being bent excessively. The cable drag chain B of the present embodiment also includes a braking mechanism for applying brake on turning of the frame body. The configuration of the present invention will be described in detail below.

Figs. 2(A) to 2(C) are views each showing the frame body configuring the cable drag chain, where Fig. 2(A) is a front view, Fig. 2(B) is a top view, and Fig. 2(C) is a view taken along line X-X in Fig. 2(B). Figs. 3(A) and 3(B) are explanatory views each showing a state in which two frame bodies are coupled. The following description referencing Figs. 3(A) and 3(B) will be made assuming the frame body on a left side in the figure is fixed. The illustration of a nail portion is not shown in the drawings after Figs. 3(A) and 3(B).

The frame body F configuring the cable drag chain is formed by resin molding a material such as polyamide resin. As shown in Figs. 2(A) to 2(C), the frame body F includes two side surface plates 1, 2, a coupling plate 3 for coupling the side surface plates 1, 2, and an openable plate (not illustrated) arranged facing the coupling plate 3, where a portion surrounded by the side surface plates 1, 2, the coupling plate 3, and the openable plate forms a space. That is, the space of each frame body F communicates by coupling the frame bodies F, thereby forming a guide section for guiding the cable. The coupling plate 3 may include a fixing portion capable of positioning the cable in the frame bodies, or may include a partitioning portion for partitioning the space. The openable plate is attached to perform an open/close operation through a hinge 4 arranged on one side surface plate 2. The other side surface plate 1 is formed with a nail portion 5 that fits to a fit-in portion of the openable plate when the openable plate is closed. According to such a configuration, the cable can be easily arranged in the space in the frame bodies F (guide section of the cable drag chain) by opening the openable plate. Furthermore, by closing the openable plate after arranging the cable, the four sides of the cable are surrounded with the frame bodies F, and therefore, the cable is prevented from coming off from the guide section and the cable can be protected from the outside.

The side surface plates 1, 2 of the frame body F integrally include various members described in the next section and thereafter. The members configure a turning mechanism for turnably coupling one frame body to another frame body when the frame bodies are coupled, a turning angle limiting mechanism for limiting the turning angle of the frame body, and a braking mechanism for applying brake on the turning before the limit of the turning angle.

### [Turning mechanism]

The two side surface plates 1, 2 configuring the frame body F have a substantially symmetrical shape with respect to each other, and thus the side surface plate 1 will be representatively described by way of example. The side surface plate 1 has a shape in which the ends of two plate-shaped members are overlapped and joined in a step-like form (offset form), and is divided to an inner side portion 10, which is on an inner side, and an outer side portion 20, which is on an outer side, with respect to the coupling plate 3. The inner side portion 10 includes a shaft part 11 projecting towards a side opposite to the coupling plate 3 from the inner side portion 10, and three guide projections 12 surrounding the shaft part 11 in a peripheral direction. The outer side portion 20 includes a shaft hole 21 and three guide holes 22 surrounding the shaft hole 21 in the peripheral direction.

When coupling a plurality of frame bodies F having the side surface plates 1, 2 described above, the inner side portion 10 of the side surface plate 1 of one frame body F1 and the outer side portion 20 of the side surface plate 1 of another frame body F2 are overlapped and coupled, as shown in Figs. 3(A) and 3(B). In this case, the shaft part 11 of the frame body F1 is fitted to the shaft hole 21 of the frame body F2, and the guide projections 12 of the frame body F1 are fitted to the guide holes 22 of the frame body F2, so that the frame body F2 coupled to the frame body F1 can be turned with the shaft part 11 as a center.

### [Turning angle limiting mechanism]

The side surface plate 1 of the frame body F includes two stopper pieces 31, 32 and two stopper pads 41, 42. The stopper piece 31 is a projection projecting in a direction same as the projecting direction of the guide projection 12 from the inner side portion 10 of the side surface plate 1. The stopper piece 32 is a projection piece extended towards the outer side portion 20 from the end on the upper left side (near nail portion 5, see Fig. 2(A)) of the inner side portion 10. The stopper pad 41 is configured by one part (lower left side) of a cutout portion formed at the side end of the outer side portion 20. The stopper pad 42 is a cutout formed at the end on the upper right side of the inner side portion 10.

When two frame bodies F, each including the above-described stopper pieces and stopper pads, are coupled, and the frame body F2 on the right side is turned in the clockwise direction with respect to the frame body F1 on the left side as shown in Fig. 3(A), an elastic projection 51 and a pad portion 61 configuring the below-described braking mechanism come into contact with each other. When the frame body F2 is further turned in the clockwise direction from the state of Fig. 3(A), the stopper piece 31 (32) and the stopper pad 41 (42) come into contact thereby limiting the turning of the frame body F2. When the frame body F2 on the right side is turned in the counterclockwise direction, as shown in Fig. 3(B), an elastic projection 52 and the pad portion 61 configuring the braking mechanism first come into contact thereby applying brake on the turning of the frame body F2, and then the stopper piece 32 and the stopper pad 42 come into contact thereby limiting turning of the frame body F2. As described above, the turning angle of the frame body F according to the present embodiment is limited to about 26.5° by the turning angle limiting mechanism configured by the stopper pieces 31, 32 and the stopper pads 41, 42 of the adjacent frame bodies F. Needless to say, the turning angle can be changed by adjusting the positions of the stopper pieces 31, 32 and the stopper pads 41, 42.

The previously described guide projection 12 and the guide hole 22 stabilize the turning of the frame body F and also play a role as the turning angle limiting mechanism. Specifically, when the coupled frame bodies F are turned, the guide projection 12 abuts against the end of the guide hole 22 thereby limiting the turning of the frame body F. That is, the guide projection 12 functions as the stopper piece, and the guide hole 22 functions as the stopper pad.

### [Braking mechanism]

One end (lower left side of Fig. 2(A)) of the outer side portion 20 of the side surface plate 1 is cut out to the vicinity of the shaft hole 21. The outer side portion 20 includes the rod-shaped elastic projections 51, 52 extending from the cutout area. Each elastic projection 51, 52 extends radially outward with the shaft hole 21 as the center, and a predetermined spacing is created between the distal ends of the projections. The other end of the outer side portion 20 includes the pad portion 61 projecting towards the inner side portion 10. When the frame bodies F are coupled, the two projections 51, 52 arranged at the outer side portion 20 of the frame body F2 sandwich with distal ends thereof the pad portion 61 of the adjacent frame body F1, as shown in Figs. 3(A) and 3(B). Each elastic projection 51, 52 comes into contact with the pad portion 61 from 4° before the turning limit of the frame body F. Thus, the elastic projection 51, 52 bends and the brake can be applied on the turning of the frame body F2 by a reactive force (elasticity) of the bend if the frame body F2 is further turned to the turning limit after the elastic projection 51, 52 and the pad portion 61 are in contact. The stopper piece 31 (32) and the stopper pad 41 (42) are prevented from hitting each other hard by the braking of the frame body F2, and hence a collision noise thereof becomes small. Furthermore, the elastic projections 51, 52 are less likely to be damaged since different elastic projections 51, 52 apply the brake on the turning of the frame body F for the clockwise direction and for the counterclockwise direction, respectively. From how many degrees before the turning limit the brake is to be applied can be adjusted by adjusting the spacing of the two elastic projections 51, 52.

In the cable drag chain of the present embodiment described above, the braking mechanism does not have a configuration of applying brake on the turning of the frame body using friction but has a configuration of applying brake on the turning of the frame body only with the elasticity of the elastic projection, and thus the braking force of the braking mechanism is less likely to degrade with use. Moreover, in the cable drag chain, the turning mechanism is less likely to be damaged since the direction the braking force acts is the peripheral direction having the shaft part 11 as the center and a load is barely applied in the radial direction.

### <Second embodiment>

In a second embodiment, there will be described a cable drag chain using the frame body in which one elastic projection and two pad portions are arranged on one side surface plate of the frame body. The configurations similar to the first embodiment are given the same reference numerals as the first embodiment, and the description thereof will not be given.

Figs. 4(A) to 4(C) are explanatory views each showing a coupling state of the frame bodies configuring the cable drag chain of the present embodiment. The side surface plate 1 of the frame body F is formed with one elastic projection 55 projecting out from the side surface. Two pad portions 65, 66 corresponding to the elastic projection 55 are also formed. Specifically, the pad portions 65, 66 are formed with a predetermined spacing on a circumference having the shaft part 11 as the center in the inner side portion 10 so as to sandwich the distal end of the elastic projection 55 of the adjacent frame body F when the frame bodies F are coupled.

When rotating the frame body F2 in the counterclockwise direction from the state in which the frame bodies F1, F2 having the above configuration are coupled as shown in Fig. 4(A), the elastic projection 55 of the frame body F2 first comes into contact with the pad portion 65 of the frame body F1. The elastic projection 55 bends by the contact with the pad portion 65, thereby applying brake on the turning of the frame body F2 by the reactive force (elasticity) of the bend. When the frame body F2 is further rotated in the counterclockwise direction, the stopper piece 32 and the stopper pad 42 come into contact thereby limiting the turning of the frame body F2, as shown in Fig. 4(B). Similarly, when rotating the frame body F2 in the clockwise direction from the state of Fig. 4(A), the elastic projection 55 first comes into contact with the pad portion 66 thereby applying brake on the turning of the frame body F2, and then the stopper piece 31 (32) and the stopper pad 41 (42) come into contact thereby limiting the turning of the frame body F2, as shown in Fig. 4(C). The collision noise of the stopper piece 31 (32) and the stopper pad 41 (42) can be also made small with the configuration of the present embodiment.

### <Third embodiment>

In a third embodiment, there will be described a configuration in which the brake is applied on the turning of the frame body by the friction when the elastic projection and the pad portion come into contact, and the elasticity of the elastic projection is used to adjust a frictional force, with reference to Figs. 5(A) and 5(B).

Figs. 5(A) and 5(B) are explanatory views each showing the coupling state of the frame bodies used in the cable drag chain of the present embodiment. Elastic projections 71, 72 arranged on the frame body F1 are formed in curved arm shapes that extend radially outward with the shaft hole 21 and the shaft part 11 as the center from both side edges of the side surface plate 1, respectively, and then extend in the peripheral direction. The curved directions of the elastic projections 71, 72 are both clockwise direction, and both elastic projections 71, 72 have a substantially point symmetric shape. A pad portion 81 corresponding to the elastic projection 71 is the side surface of the outer side portion 20, and a pad portion 82 corresponding to the elastic projection 72 is the side surface of the inner side portion 10.

When rotating the frame body F2 in the counterclockwise direction from the state in which the frame bodies F1, F2 having the above configuration are coupled, the elastic projection 71 of the frame body F2 first slidably comes into contact with the pad portion 81 of the frame body F1 thereby applying brake on the turning of the frame body F2 by the frictional force thereof, as shown in Fig. 5(A). The bending amount of the elastic projection 71 becomes greater as the frame body F2 approaches the turning limit, and the friction of the elastic projection 71 and the pad portion 81 increases by the reactive force (elasticity) of the bend. When the frame body F2 is further rotated in the counterclockwise direction, the stopper piece 32 and the stopper pad 42 come into contact and the stopper piece 31 and the root portion (stopper pad 43) of the elastic projection 71 come into contact thereby limiting the turning of the frame body F2. Similarly, when rotating the frame body F2 in the clockwise direction, the elastic projection 72 slidably comes into contact with the pad portion 82 thereby applying brake on the turning of the frame body F2, and finally, the stopper piece 31 (32) and the stopper pad 41 (42) come into contact thereby limiting the turning of the frame body F2, as shown in Fig. 5(B).

The configuration of the present embodiment is a configuration of applying brake on the turning of the frame body by friction, where the elasticity of the elastic projection is used to increase the frictional force. Thus, the degradation of the braking force involved in usage is less likely to occur with the configuration of the present embodiment than with the configuration of applying brake only with friction.

### <Fourth embodiment>

In a fourth embodiment, another embodiment of a configuration in which the brake is applied on the turning of the frame body by the friction when the elastic projection and the pad portion come into contact, and the elasticity of the elastic projection is used to adjust the frictional force will be described with reference to Figs. 6(A) and 6(B). One elastic projection and one pad portion are arranged in the present configuration.

Figs. 6(A) and 6(B) are explanatory views each showing the coupling state of the frame bodies used in the cable drag chain of the present embodiment. An elastic projection 75 arranged on the frame body F is a member, of the outer side portion 20 of the side surface plate 1, having a curved arm shape extending along the outer shape of the outer side portion 20 from the vicinity of the coupling plate 3. A hook-shaped projection and a hill-shaped projection projecting out towards the shaft hole 21 are formed at the distal end and the central part of the elastic projection 75, respectively. A pad portion 85 corresponding to the elastic projection 75 also serves as the stopper piece 31, and includes a portion projecting radially outward in a hill shape with the shaft part 11 as the center.

When rotating the frame body F2 in the counterclockwise direction from the state in which the frame bodies F1, F2 having the above configuration are coupled, the elastic projection 75 of the frame body F2 slidably comes into contact with the pad portion 85 of the frame body F1 thereby applying brake on the turning of the frame body F2 by the frictional force thereof, as shown in Fig. 6(A). More specifically, the projecting portion of the pad portion 85 slidably comes into contact with the hook-shaped projection of the elastic projection 75. The bending amount of the elastic projection 75 towards the outer side of the frame body F2 becomes greater as the frame body F2 approaches the turning limit and the friction of the elastic projection 75 and the pad portion 85 increases by the reactive force (elasticity) of the bend. When the frame body F2 is further rotated in the counterclockwise direction, the stopper piece 32 and the stopper pad 42 comes into contact with each other and the stopper pierce 31 and the stopper pad 44 comes into contact with each other, thereby limiting the turning of the frame body F2. Similarly, when rotating the frame body F2 in the clockwise direction, the hill-shaped projection of the elastic projection 75 slidably comes into contact with the projecting portion of the pad portion 85 thereby applying brake on the turning of the frame body F2, and finally, the stopper piece 31 (32) and the stopper pad 41 (42) come into contact thereby limiting the turning of the frame body F2, as shown in Fig. 6(B).

The embodiments of the present invention are not limited to the embodiments described above, and modifications may be appropriately made within a scope not deviating from the gist of the present invention.

### INDUSTRIAL APPLICABILITY

A cable drag chain of the present invention can be suitably used to guide and protect a cable to be connected to a movable body. For example, the cable drag chain of the present invention can be used to guide and protect the cable for supplying power and the like to a carriage of a flat knitting machine.

## Claims

1. A cable drag chain formed by coupling a plurality of frame bodies so as to be turnable with respect to each other, a long body such as a cable being arranged in a guide section surrounded by each of the frame bodies; the cable drag chain comprising:
a turning angle limiting mechanism for limiting a turning angle of the frame body; and
a braking mechanism for applying brake on turning of the frame body before a limit of the turning angle; wherein
the turning angle limiting mechanism includes a stopper piece and a stopper pad integrally formed in each of the frame bodies, and limits the turning angle of the frame bodies when the stopper piece of one frame body comes into contact with the stopper pad of the other frame body in the coupled frame bodies;
the braking mechanism includes an elastic projection integrally formed with the frame body at one end side of each of the frame bodies and a pad portion integrally formed with the frame body at the other end side of each of the frame bodies; and
when the coupled frame bodies are turned, the elastic projection of one frame body comes into contact with the pad portion of the other frame body to apply brake on relative turning of the frame bodies by an elasticity of the elastic projection.

2. The cable drag chain according to claim 1, wherein
a pair of elastic projections is arranged in a cantilever form at one frame body, a distal end of each of the elastic projections being arranged with a predetermined spacing; and
a pad portion is arranged at the other frame body so as to be arranged between the pair of elastic projections.

3. The cable drag chain according to claim 1, wherein
one elastic projection is arranged in a cantilever form at one frame body; and
a pair of pad portions is arranged at the other frame body with a predetermined spacing to sandwich the elastic projection therebetween.
